# EUROPEAN PATENT APPLICATION

(11) **EP 2 339 397 A1**
(43) Date of publication of application: **29.06.2011**
(21) Application number: 10251035.1
(22) Date of filing: 04.06.2010
(51) Int. Cl.: G03B 13/34, G02B 7/04

(54) **Lens module of an imaging device and a method of using the same**

(30) Priority: 10.12.2009 TW 098142312
(71) Applicant: Ability Enterprise Co., Ltd., Tapei (TW)
(72) Inventor: Cheng, Wen-Chieh, Taipei City (TW); Lu, Chien-Hsin, Taipei (TW)
(74) Representative: Hodsdon, Stephen James

(57) **Abstract**

The present invention is directed to the lens module of an imaging device. The lens module primarily includes a lens-barrel plate, a shutter plate and an elastic device. The lens-barrel plate includes at least one guide post, which is vertically arranged on the surface of the lens-barrel plate. The shutter plate includes at least one groove, which facilitates movement of the guide post in the groove. Each elastic device corresponds to the associated guide post and groove. Accordingly, the elastic device is pressed when external force exerts on the lens-barrel plate and the shutter plate; and the recovered elastic device then separates the shutter plate from the lens-barrel plate when the external force is remove ed.

## Description

### BACKGROUND OF THE INVENTION

### 1. FIELD OF THE INVENTION

The present invention generally relates to an imaging device, and more particularly to the imaging device having a lens module.

### 2. DESCRIPTION OF THE PRIOR ART

An imaging device, such as a digital camera or a digital camcorder, primarily combines a lens module with an image sensor to collect image light and then converts the image light into electronic signals, which may be stored, processed or transmitted afterwards.

Like most electronic devices, miniaturization is one of the product trends of the digital camera or the digital camcorder. Accordingly, miniaturizing the lens module becomes one of the design goals of the imaging device. For the purpose of achieving this goal, a shutter is typically located at different locations when it is turned on and off. In other words, the miniaturization of the lens module may be achieved by increasing the stroke of shutter movement.

In addition to increasing the stroke of the shutter movement to reduce the thickness of the imaging device, a need has also arisen to design a novel lens module with simple construction, easy assembling and contamination free internally, for reducing manufacturing cost, product price and advancing production yield.

### SUMMARY OF THE INVENTION

In view of the foregoing, the embodiment of the present invention provides a lens module of an imaging device for increasing the stroke of shutter movement in order to miniaturize the lens module and reduce the thickness of the imaging device. Moreover, the embodiment of the present invention provides a lens module that has simple construction and may be assembled easily.

According to one embodiment of the present invention, the lens module of an imaging device primarily includes a lens-barrel plate, a shutter plate and at least one elastic device. The lens-barrel plate drives a lens to move along an optical axis. The lens-barrel plate includes a first center hole aligned with the optical axis and at least one guide post vertically arranged on a surface of the lens-barrel plate. The shutter plate includes a second hole aligned with the optical axis, and at least one groove for facilitating movement of the guide post therein. Each elastic device corresponds to the guide post and the groove. Accordingly, the elastic device is pressed when an external force exerts on the lens-barrel plate and the shutter plate; and the shutter plate is separated from the lens-barrel plate by the recovered elastic device when the external force is removed.

### BRIEF DESCRIPTION OF THE DRAWINGS

FIG. 1 shows a perspective exploded view of a lens module of an imaging device according to one embodiment of the present invention;
FIG. 2A shows a schematic cross section of the imaging device at the first state illustrating that the lens-barrel plate becomes close to the shutter plate, which finally stops at a base;
FIG. 2B shows a schematic cross section of the imaging device at the second state illustrating that the lens-barrel plate, the shutter plate and the base are separated from each other;
FIG. 3A and FIG. 3B show partial schematic top views illustrating relative movement between the snap and the protrusion;
FIG. 4A and FIG. 4B show partial schematic top views illustrating relative movement between the hook and the protrusion; and
FIG. 5A and FIG. 5B show partial schematic top views illustrating relative movement between the hook and the shutter plate.

### DETAILED DESCRIPTION OF THE INVENTION

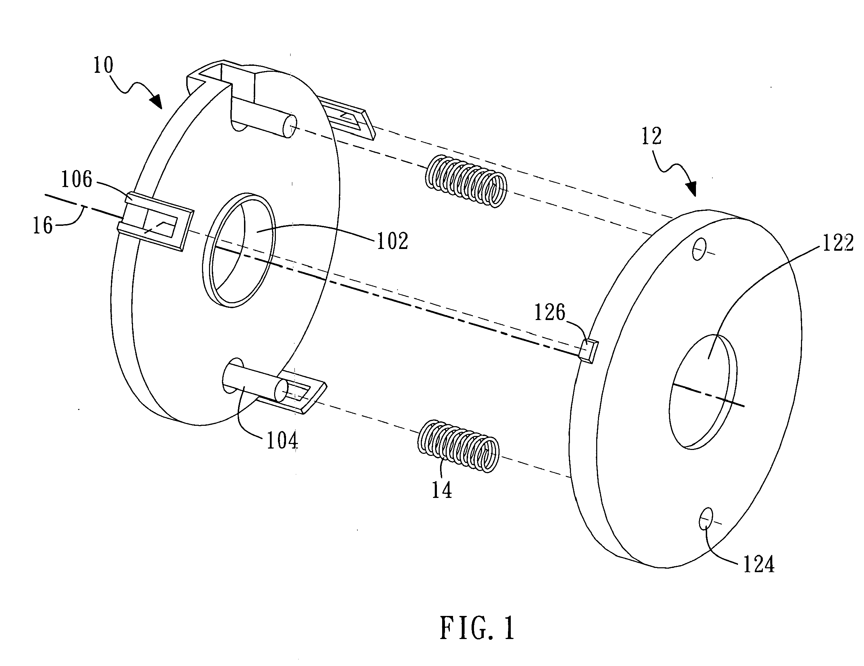

FIG. 1 shows a perspective exploded view of a lens module of an imaging device according to one embodiment of the present invention. In order to manifest aspects of the embodiment, only structures pertinent to the present embodiment are depicted for brevity. Although a digital camera is exemplified as the imaging device here, the present embodiment may well be adapted to other imaging device such as a digital camcorder.

In the embodiment, the lens module mainly includes a lens-barrel plate 10, a shutter plate 12 and an elastic device 14. The digital camera generally includes some lens barrels, such as a front barrel, a center barrel and a rear barrel. The lens-barrel plate 10 shown in FIG. 1 belongs to the center barrel. The lens-barrel plate 10 drives a lens (not shown) to move along an optical axis 16. In the embodiment, the lens-barrel plate 10 primarily includes a first center hole 102, a guide post 104 and a snap 106. Specifically, the first center hole 102 is aligned with the optical axis 16. The guide post 104 is vertically arranged on the surface of the lens-barrel plate 10. At least one guide post 104 may be used, and two guide posts 104 are used in a preferred embodiment (as shown in FIG. 1). The snap 106 is arranged on and protruded from the edge of the lens-barrel plate 10, and is to be engaged with a protrusion (or called projection) of the shutter plate 12 to act as a limiting mechanism, which will be described in details later in the specification. At least two snaps 16 may be used, and three snaps 16 are used in a preferred embodiment (as shown in FIG. 1).

The shutter plate 12 is one component of a shutter. In the embodiment, the shutter plate 12 mainly includes a second center hole 122, a groove 124 and a protrusion 126. Specifically, the second center hole 122 is aligned with the optical axis 16. The groove 124 may or may not pass through the shutter plate 12. The location of the groove 124 corresponds to the guide post 104 of the lens-barrel plate 10 for allowing the guide post 104 to move in the groove 124. Therefore, the number of the grooves 124 is typically equal to the number of the guide posts 104. The protrusion 126 arranged on and protruded from the edge of the shutter plate 12 corresponds to the snap 106 of the lens-barrel plate 10. Thereby, the number of the protrusions 126 is usually equal to the number of the snaps 106.

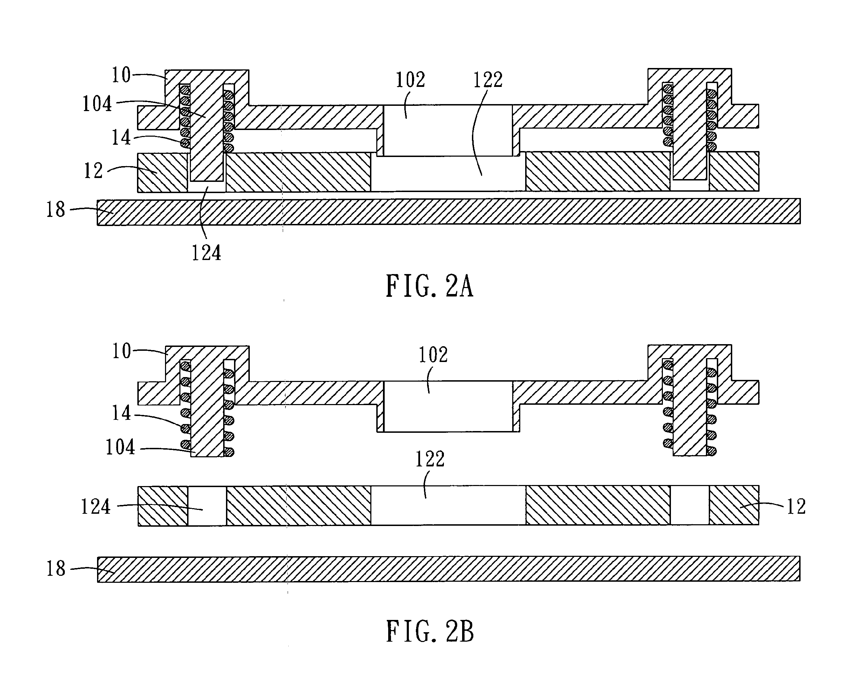

According to the lens module described above, when the imaging device enters a first state (e.g., turn off), an external force exerts on the lens-barrel plate 10 and the shutter plate 12 such that the elastic device 14 is pressed and the guide post 104 moves in the groove 124. As a result, the lens-barrel plate 10 becomes close to the shutter plate 12. FIG. 2A shows a schematic cross section, at the first state, illustrating that the lens-barrel plate 10 presses the elastic device 14 and becomes close to the shutter plate 12, which finally stops at a fixed base 18 of the imaging device. Specifically, the elastic device 14 (for example, a spring) is passed by the guide post 104 and surrounds the guide post 104. One end of the elastic device 14 is pressed against a surface of the lens-barrel plate 10, and another end thereof is pressed against a surface of the shutter plate 12. The groove 124 has a diameter slightly larger than the diameter of the guide post 104, and the elastic device 14 (for example, the spring) has a diameter slightly larger than the diameter of the groove 124.

When the imaging device enters a second state (e.g., turn on), the external force is removed, and the recovered elastic device 14 separates the shutter plate 12 from the lens-barrel plate 10. FIG. 2B shows a schematic cross section, at the second state, illustrating that the elastic device (e.g., the spring) separates the shutter plate 12 from the lens-barrel plate 10. Subsequently, the lens-barrel plate 10 and its associated lens are driven to move along the optical axis 16 for capturing an image. As a result, the lens-barrel plate 10, the shutter plate 12 and the base 18 are separated from each other.

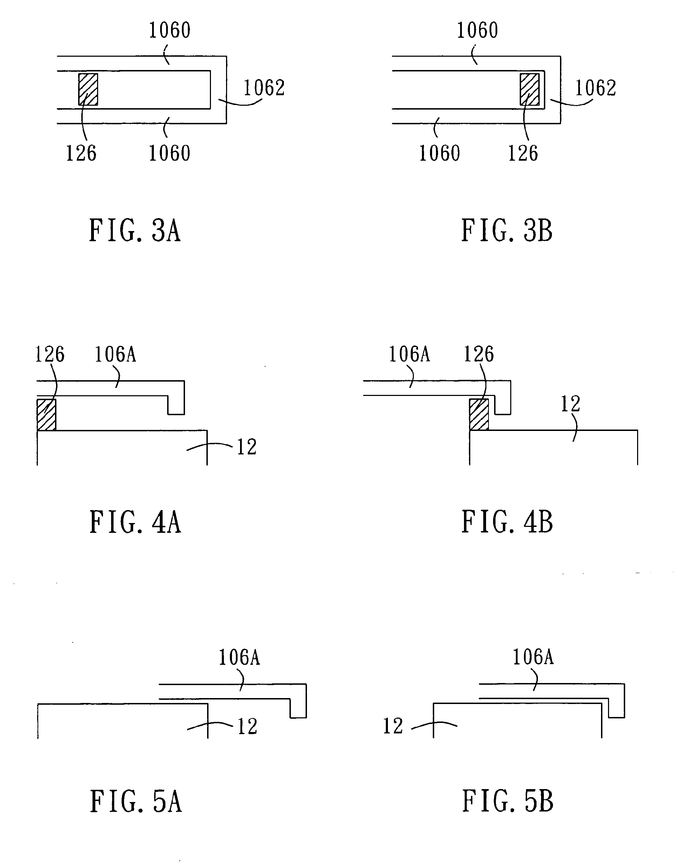

According to another aspect of the present invention, the snap 106 of the lens-barrel plate 10 and the protrusion 126 of the shutter plate 12 may provide limiting mechanism for limiting maximum stroke when the shutter plate 12 is separated from the lens-barrel plate 10. In the embodiment, each snap 106 is made of two strips 1060 and a stop 1062. Specifically, as shown in a partial schematic top view depicted in FIG. 3A, the two strips 1060 are separated from each other with a predetermined distance, and the resultant space between the two strips 1060 is used to accommodate the protrusion 126. The stop 1062 is arranged at the ends of the two strips 1060. FIG. 3B shows a partial schematic top view illustrating that the protrusion 126 stops at the stop 1062 when the shutter plate 12 and the lens-barrel 10 are separated with the maximum stroke.

The limiting mechanism in the embodiment may be equivalently modified. In another embodiment, as shown in a partial schematic top view depicted in FIG. 4A, a hook 106A arranged on and protruded from the lens-barrel plate 10 is to be correspondingly engaged with the protrusion 126. FIG. 4B shows a partial schematic top view illustrating that the hook 106A catches the protrusion 126 when the shutter plate 12 and the lens-barrel 10 are separated with the maximum stroke. In a further embodiment, as shown in a partial schematic top view depicted in FIG. 5A, the hook 106A is used while the protrusion 126 is omitted. FIG. 5B shows a partial schematic top view illustrating that the hook 106A catches the shutter plate 12 when the shutter plate 12 and the lens-barrel 10 are separated with the maximum stroke.

Although specific embodiments have been illustrated and described, it will be appreciated by those skilled in the art that various modifications may be made without departing from the scope of the present invention, which is intended to be limited solely by the appended claims.

## Claims

1. A lens module of an imaging device, comprising:
a lens-barrel plate configured for driving a lens to move along an optical axis, the lens-barrel plate including a first center hole aligned with the optical axis and at least one guide post vertically arranged on a surface of the lens-barrel plate;
a shutter plate including a second hole aligned with the optical axis, and at least one groove for facilitating movement of the guide post therein; and
at least one elastic device respectively corresponding to the guide post and the groove;
wherein the elastic device is pressed when an external force exerts on the lens-barrel plate and the shutter plate; and the shutter plate is separated from the lens-barrel plate by the recovered elastic device when the external force is removed.

2. The lens module of claim 1, wherein the imaging device is one of the following: a digital camera and a digital camcorder.

3. The lens module of claim 1 or claim 2, further comprising at least two limiting mechanisms, arranged on at least one of the lens-barrel plate and the shutter plate, for limiting maximum stroke when the shutter plate is separated from the lens-barrel plate.

4. The lens module of claim 3, wherein each said limiting mechanism comprises:
a snap arranged on and protruded from an edge of the lens-barrel plate; and
a protrusion arranged on and protruded from an edge of the shutter plate, the protrusion being corresponding to the snap.

5. The lens module of claim 4, wherein the snap comprises:
at least two strips, which are separated from each other to result in a space to accommodate the protrusion; and
a stop arranged on ends of the strips such that the protrusion stops at the stop when the shutter plate is separated from the lens-barrel plate with a maximum stroke.

6. The lens module of claim 3, wherein each said limiting mechanism comprises:
a hook arranged on and protruded from an edge of the lens-barrel plate for catching the shutter plate when the shutter plate is separated from the lens-barrel plate with a maximum stroke.

7. The lens module of claim 3, wherein each said limiting mechanism comprises:
a hook arranged on and protruded from an edge of the lens-barrel plate; and
a protrusion arranged on and protruded from an edge of the shutter plate, the protrusion being corresponding to the hook;
thereby the hook catches the protrusion when the shutter plate is separated from the lens-barrel plate with a maximum stroke.

8. The lens module of any one of claims 1 to 7, wherein the elastic device is a spring, which is passed by and surrounds the guide post.

9. The lens module of claim 8, wherein the groove has a diameter larger than a diameter of the guide post, and the spring has a diameter larger than a diameter of the groove.

10. The lens module of any one of claims 1 to 9, wherein the groove passes through the shutter plate.

11. The lens module of claim 10, further comprising a base fixed on the imaging device such that the shutter plate stops at the base when the lens-barrel plate and the shutter plate are close to each other according to the external force.
